# EUROPÄISCHE PATENTANMELDUNG

(11) **EP 4 477 783 A1**
(43) Veröffentlichungstag der Anmeldung: **18.12.2024**
(21) Anmeldenummer: 23020286.3
(22) Anmeldetag: 12.06.2023
(51) Int. Cl.: C25B 15/021, C25B 1/04

(54) **VERFAHREN UND ANLAGE ZUR HERSTELLUNG VON WASSERSTOFF UND/ODER SAUERSTOFF**

(71) Anmelder: Linde GmbH, 82049 Pullach (DE)
(72) Erfinder: Müller-Thorwart, Ole, 82049 Pullach (DE); Krebs, Benjamin, 82049 Pullach (DE); Liebhart, Christian, 82049 Pullach (DE); Dillig, Marius, 82049 Pullach (DE); Fruhmann, Christian, 82049 Pullach (DE); Wolf, Andreas, 82049 Pullach (DE)

(57) **Zusammenfassung**

Es wird ein Verfahren (100) zur Herstellung von Wasserstoff und/oder Sauerstoff durch Elektrolyse vorgeschlagen, bei dem eine Elektrolyseeinheit (10) mit Gleichstrom (2) gespeist wird, der unter Verwendung eines Gleichrichters (20) aus Wechselstrom (1) bereitgestellt wird, wobei die Elektrolyseeinheit (10) unter Verwendung eines Wasserkreislaufs (110) mit Wasser gespeist wird. Es ist vorgesehen, dass der Gleichrichter (20) unter Verwendung von Kühlwasser gekühlt wird, das unter Verwendung eines Teilstroms (5) von in dem Wasserkreislauf (110) geführtem und/oder dem Wasserkreislauf zugeführtem Wasser bereitgestellt wird. Eine entsprechende Anlage ist ebenfalls Gegenstand der vorliegenden Erfindung.

## Beschreibung

Die Erfindung betrifft ein Verfahren und eine Anlage zur Herstellung von Wasserstoff und/oder Sauerstoff durch Elektrolyse.

### Hintergrund

Die Herstellung von Wasserstoff und/oder Sauerstoff mittels Wasserelektrolyse ist bekannt und beispielsweise in dem Artikel "Hydrogen" in Ullmann's Encyclopedia of Industrial Chemistry, Wiley-VCH, 15. Juni 2000, DOI: 10.1002/14356007.a13_297, insbesondere in Abschnitt 4.2, "Electrolysis", beschrieben.

In einer Wasserelektrolyseanlage wird Wasser mit Hilfe von elektrischem Strom in Wasserstoff und Sauerstoff aufgespalten. Mittels einer Stromversorgungseinheit wird das Spannungsniveau eines Wechselstroms über einen Wechselstromtransformator angepasst. Der Wechselstrom wird mittels eines Gleichrichters in einen Gleichstrom umgewandelt, da ein Elektrolysezellstapel diese Stromart benötigt.

Ein Teil der elektrischen Leistung, die der Stromversorgungseinheit zugeführt wird, wird in Wärme umgewandelt und muss kontinuierlich abgeführt werden. Die Erfindung stellt sich die Aufgabe, hier Verbesserungen zu schaffen.

### Offenbarung der Erfindung

Vor diesem Hintergrund werden ein Verfahren und eine Anlage zur Herstellung von Wasserstoff und/oder Sauerstoff durch Elektrolyse mit den jeweiligen Merkmalen der unabhängigen Patentansprüche vorgeschlagen. Ausgestaltungen sind Gegenstand der abhängigen Patentansprüche und der nachfolgenden Beschreibung.

Für die Wasserelektrolyse können Elektrolysezellen mit Protonenaustauschmembranen (engl. Proton Exchange Membranes, PEM) eingesetzt werden. In entsprechenden Elektrolysezellen wird ein Festpolymerelektrolyt, die Protonenaustauschmembran, verwendet. Die Protonenaustauschmembran dient zur Leitung von Protonen, zur Abtrennung der Produktgase, und zur elektrischen Isolierung der Anoden- und Kathodenseite voneinander. Durch den Einsatz von Elektrolysezellen mit Protonenaustauschmembranen kann ein Teil der Probleme hinsichtlich des Teillastbetriebs sowie der geringen möglichen Stromdichten, die bei der konventionellen alkalischen Elektrolyse auftreten, überwunden werden.

Aufgrund des vergleichsweise hohen Drucks des gebildeten Wasserstoffs bei der Verwendung von Elektrolysezellen mit Protonenaustauschmembranen können Verbraucher direkt versorgt werden. Die verwendbaren hohen Stromdichten führen zu vergleichsweise geringen Betriebskosten, insbesondere in Fällen, in denen dynamische elektrische Energiequellen wie Wind und Sonne zum Einsatz kommen, wobei Spitzen in der Energiezufuhr andernfalls nicht genutzt werden können. Der Polymerelektrolyt ermöglicht die Verwendung dünner Membranen von beispielsweise ca. 100 bis 200 µm bei zugleich hohen Drücken. Dies führt zu geringen ohmschen Verlusten, die in erster Linie durch die Leitung von Protonen durch die Membran und die Bildung von druckbeaufschlagtem Wasserstoff verursacht werden.

Die Polymerelektrolytmembran weist aufgrund ihrer festen Struktur eine niedrige Gasübergangsrate auf, was zu einer sehr hohen Produktgasreinheit führen kann. Dies kann insbesondere für die Speichersicherheit und für die direkte Verwendung, beispielsweise in einer Brennstoffzelle, vorteilhaft sein.

Die Anodenreaktion in einer Elektrolysezelle mit Protonenaustauschmembran wird gemeinhin als Sauerstoffentwicklungsreaktion (engl. Oxygen Evolution Reaction, OER) bezeichnet. An der Anode wird der flüssige Reaktant Wasser dem Katalysator zugeführt und zu Sauerstoff, Protonen und Elektronen oxidiert.

Die Kathodenreaktion wird gemeinhin als Wasserstoffentwicklungsreaktion (engl. Hydrogen Evolution Reaction, HER) bezeichnet. Hierbei werden die zugeführten Elektronen mit den durch die Membran geleiteten Protonen kombiniert, wodurch gasförmiger Wasserstoff erzeugt wird.

Wenngleich die vorliegende Erfindung nachfolgend (zumindest überwiegend) unter Bezugnahme auf eine Elektrolyse mittels Protonenaustauschmembranen beschrieben wird, eignen sich Ausgestaltungen der vorliegenden Erfindung grundsätzlich auch für andere Elektrolyseverfahren, bei denen die hier beschriebenen Probleme in gleicher Weise auftreten können. Diese können beispielsweise eine herkömmliche Wasserelektrolyse umfassen, bei der eine wässrige alkalische Lösung, typischerweise von Kaliumhydroxid, als Elektrolyt verwendet wird (AEL, Alkalische Elektrolyse). Die Elektrolyse erfolgt dabei mit einer uni- oder bipolaren Elektrodenanordnung bei Atmosphärendruck oder, im industriellen Maßstab, auch deutlich darüber.

In dem hier vorgeschlagenen Verfahren wird einer Elektrolyseeinrichtung anodenseitig ein als Anodengas bezeichnetes Gasgemisch entnommen. Dieses ist typischerweise wassergesättigt und besteht überwiegend aus Sauerstoff, weist jedoch auch einen nicht unbeträchtlichen Wasserstoffanteil auf.

Typischerweise wird in einer entsprechenden Elektrolyseeinrichtung, in der Protonenaustauschmembranen verwendet werden, eine Vielzahl von Elektrolysezellen verwendet, wobei die Elektrolysezellen insbesondere Teil eines oder mehrerer Elektrolysezellstapel (Stacks) bekannter Art sein können. In einem derartigen Elektrolysezellstapel ist im Fall einer Elektrolyse unter Verwendung einer Protonenaustauschmembran eine Vielzahl von Anordnungen aus jeweils Anode, Protonenaustauschmembran und Kathode bereitgestellt, die jeweils durch Trenneinrichtungen und Mittel zur Wassereinspeisung bzw. Gasentnahme voneinander getrennt sind. In anderen Elektrolyseverfahren können die dort vorhandenen Elemente ebenfalls in Mehrzahl vorhanden sein. Es können Einspeise- bzw. Sammelleitungen bereitgestellt sein, die den oder die Elektrolysezellstapel insgesamt versorgen.

Unter dem hier als Anodengas bezeichneten Gasgemisch soll dabei das anodenseitig dem oder den Zellstapeln insgesamt entnommene Gas oder einen Teil hiervon verstanden werden. Bei Verwendung von Protonenaustauschmembranen wird das Anodengas dabei zusammen mit Wasser an der Anodenseite entnommen, d.h. von der Anodenseite wird zunächst ein Zweiphasenstrom ausgeführt. Nach einer Trennung in Gas- und Flüssigphase in einem Separator liegt das Anodengas als Gasphase vor.

Die Begriffe "speiseseitig", "anodenseitig" und "kathodenseitig" bezeichnen dabei die Positionen bzw. die Einrichtungen, an denen bzw. mittels derer einem Elektrolysezellstapel oder einem Modul oder einer anderen übergeordneten Einheit, d.h. einer Elektrolyseeinheit gemäß dem hier verwendeten Sprachgebrauch, Wasser als Einsatz, ein Anodengas als Produkt (ggf. mit Wasser) und ein Kathodengas als Produkt entnommen werden. Als Überbegriff von "anodenseitig" und "kathodenseitig" wird im Falle einer Entnahme des Anodengases bzw. Kathodengases nachfolgend auch der Begriff "produktseitig" verwendet. Das anodenseitig entnommene Anodengas wird, wie erwähnt, bei einer Elektrolyse mit Protonenaustauschmembranen in einer in einem Zweiphasengemisch mit Wasser entnommen. Zur besseren Bezugnahme wird nachfolgend auch der Begriff "Anodenwasser" verwendet.

Bei einem Niederspannungsgleichrichter erfolgt die erforderliche Wärmeabfuhr in der Regel durch eine Luftkühlung, z.B. mittels eines oder mehrerer Ventilatoren. Zumindest für einen Mittelspannungsgleichrichter wäre jedoch auch grundsätzlich eine Wasserkühlung attraktiv. Aufgrund der kompakten Bauweise und der engen Kanäle kann Standardkühlwasser jedoch typischerweise nicht zur Gleichrichterkühlung verwendet werden. Eine aus dem Stand der Technik bekannte Lösung besteht beispielsweise in der Bereitstellung eines Kühlkreislaufs, der mit einem Wasser-Glykol-Gemisch als Kühlmedium betrieben wird.

Großtechnische Elektrolyseanlagen sind in der Regel in Modulen aufgebaut, in denen mehrere Elektrolysezellstapel (wie oben erläutert) in einem für die Elektrolyse erforderlichen, sogenannten Hauptwasserkreislauf (Sauerstoff-Wasserstoff-Trennung, Pumpe, Wärmetauscher)
kombiniert sind. Mehrere solcher Module können verwendet werden, um die gesamte erforderliche Elektrolysekapazität bereitzustellen.

Ausgestaltungen der vorliegenden Erfindung beruhen nunmehr auf der Erkenntnis, dass der Hauptwasserkreislauf in der Elektrolyse bereits hochreines Wasser umfasst, bzw. das dem Hauptwasserkreislauf hochreines Wasser in einem Zulauf zugeführt wird, und ein wassergekühlter Gleichrichter daher mit besonderem Vorteil in den Hauptwasserkreislauf der Elektrolyse bzw. dessen Zulauf integriert werden kann.

Generell soll hier, wenn von einem Element, einem Bauteil, einer Komponente oder einem Verfahrensschritt im Singular die Rede ist ("ein" Elektrolysezellstapel, "ein" Elektrolysemodul mit "einem" Elektrolysezellstapel, "ein" Gleichrichter, "eine" Stromversorgungseinheit usw.), nicht ausgeschlossen sein, dass entsprechende Elemente, Bauteile, Komponenten oder Verfahrensschritte auch in Mehrzahl vorhanden sein können und jeweils gleich, identisch, im Wesentlichen identisch, vergleichbar oder unterschiedlich realisiert sein können.

Es wird ein Verfahren zur Herstellung von Wasserstoff und/oder Sauerstoff durch Elektrolyse vorgeschlagen, bei dem eine Elektrolyseeinheit mit Gleichstrom gespeist wird, der unter Verwendung eines Gleichrichters aus Wechselstrom bereitgestellt wird, wobei die Elektrolyseeinheit unter Verwendung eines Wasserkreislaufs betrieben wird. Der Gleichrichter wird unter Verwendung von Kühlwasser gekühlt, das unter Verwendung eines Teilstroms von in dem Wasserkreislauf geführtem und/oder dem Wasserkreislauf zugeführtem Wasser bereitgestellt wird.

Durch die hier vorgeschlagene Verfahrensführung wird zunächst der Nachteil einer bekannten Luftkühlung, insbesondere in Innenräumen, vermieden, der in einem ausgesprochen hohen HLK-Bedarf (Heizung, Lüftung, Klimatechnik; engl. Heating Cooling, Air Conditioning, HVAC) besteht, um die erforderliche Kühlung zu gewährleisten. Auch die vergleichsweise hohen Invest- und Betriebskosten (engl. Capital Expenses, CAPEX bzw. Operating Expenses, OPEX) von Gleichrichtern mit einem unabhängigen (Wasser-Glykol-)Kühlkreislauf sowie der Wartungsaufwand können in hier vorgeschlagenen Ausgestaltungen verringert werden.

Die insbesondere bei Verwendung mehrerer Gleichrichter in einer nicht erfindungsgemäßen Anlage erforderliche aufwendige Verrohrung, falls eine gemeinsame Pumpe und ein gemeinsamer Wärmetauscher verwendet werden, fällt weg. Im Fall der Verwendung individueller Kreisläufe pro Elektrolysemodul kann dagegen auf eine entsprechend hohe Anzahl von Pumpen und Wärmetauschern verzichtet werden.

In Ausgestaltungen des vorgeschlagenen Verfahrens wird der Elektrolyseeinheit Wasser in einem Zweiphasenstrom mit einem Anodengas entnommen, wobei der Zweiphasenstrom einer Separatoreinheit zugeführt wird. Entsprechende Ausgestaltungen kommen insbesondere bei einer Elektrolyse mit Protonenaustauschmembran vorteilhaft zum Einsatz.

Einer entsprechenden Separatoreinheit kann insbesondere Wasser entnommen und zumindest zum Teil einer Kühleinheit zugeführt werden. Die Kühleinheit kann insbesondere als mit Kühlwasser betriebener Wärmetauscher, Luftkühler oder anderer Wärmetauscher bzw. Kühler an sich bekannter Art bereitgestellt sein. Auf gesonderte Kühler zur Kühlung des Kühlwassers kann in entsprechenden Ausgestaltungen vorteilhafterweise verzichtet werden.

Hierzu wird in Ausgestaltungen der vorliegenden Erfindung der zur Bereitstellung des Kühlwassers verwendete Teilstrom insbesondere von einem der Kühleinheit entnommenen Wasserstrom abgezweigt. Auf diese Weise weist der Kühlwasserstrom bereits eine geeignete Temperatur auf.

Ein nach dem Abzweigen des Teilstroms verbleibender Reststrom des der Kühleinheit entnommenen Wasserstroms oder ein Teil hiervon kann in Ausgestaltungen zur Bereitstellung des Wassers verwendet werden, mit dem die Elektrolyseeinheit gespeist wird. Auf diese Weise wird der Wasserkreislauf geschlossen. Vorzugsweise sind dabei, wie erwähnt, keine weiteren Bauteile zur Bewerkstelligung der Kühlung vorzusehen. Mit anderen Worten kann ein Hauptwasserpumpe des Wasserkreislaufs auch zum Fördern des Kühlwasserstroms durch den Gleichrichter und ein Hauptwärmetauscher auch zur Kühlung desselben verwendet werden.

Der Separatoreinheit kann weiteres Wasser entnommen werden, von dem zumindest ein insbesondere einstellbarer Teil unter Umgehung (Bypass) der Kühleinheit zur Bereitstellung des Wassers verwendet werden kann, mit dem die Elektrolyseeinheit gespeist wird. Auf diese Weise ist es möglich, eine Temperatur dieses Wassers auf einen geeigneten Wert einzustellen. Durch die Abzweigung des Kühlwasserstroms stromauf einer Rückspeisung des Bypasses kann dieser vorteilhafterweise mit einer geringeren Temperatur bereitgestellt werden.

Das Kühlwasser oder ein Teil hiervon wird nach seiner Verwendung typischerweise einer Reinigungseinheit zugeführt. Es kann aber auch vorgesehen sein, einen Anteil hiervon nach der Verwendung zur Kühlung des Gleichrichters in die Separatoreinheit zurückzuführen.

Das der Separatoreinheit entnommene Wasser kann in Ausgestaltungen des hier vorgeschlagenen Verfahrens eine Temperatur in einem Temperaturbereich von 50 bis 80 °C, insbesondere von 55 bis 75° C oder 55 bis 60 °C, aufweist und/oder der der Kühleinheit entnommene Wasserstrom kann eine Temperatur in einem Temperaturbereich von weniger als 50 °C, insbesondere weniger als 45 °C oder weniger als 43 °C, aufweisen und/oder das Wasser, mit dem die Elektrolyseeinheit gespeist wird, kann eine Temperatur in einem Temperaturbereich von als 50 bis 80 °C, insbesondere 50 bis 75 °C, aufweisen. Diese Temperaturen lassen sich in geeigneter Weise anpassen.

In Ausgestaltungen des hier vorgeschlagenen Verfahrens kann der Wasserkreislauf einen Reinigungskreislauf umfassen, wobei der zur Bereitstellung des Kühlwassers verwendete Teilstrom ein Teilstrom des in dem Reinigungskreislauf geführten Wassers ist. Ist dies nicht der Fall, reduziert der Kühlwasserstrom das in einem entsprechenden Reinigungskreislauf geführte Wasser und den Wärmebedarf.

Die vorgeschlagene Anlage zur Herstellung von Wasserstoff und/oder Sauerstoff ist mit einer Elektrolyseeinheit und einem Gleichrichter ausgestattet, wobei der Gleichrichter dafür eingerichtet ist die Elektrolyseeinheit mit Gleichstrom zu speisen und den Gleichstrom aus Wechselstrom bereitzustellen, wobei die Anlage dafür eingerichtet ist, die Elektrolyseeinheit unter Verwendung eines Wasserkreislaufs mit Wasser zu speisen. Die vorgeschlagene Anlage ist dafür eingerichtet, den Gleichrichter unter Verwendung von Kühlwasser zu kühlen und das Kühlwasser unter Verwendung eines Teilstroms von in dem Wasserkreislauf geführtem und/oder dem Wasserkreislauf zugeführtem Wasser bereitzustellen.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

Zuasmmengefasst bestehen dieVorteile der Erfindung darin, dass kein separater - Kühlkreislauf für die Gleichrichterkühlung erforderlich ist, keine separate Pumpe bzw. kein separater Wärmetauscher für diesen Zweck bereitgestellt werden muss, und eine kurze Verrohrung ausreicht, da eine Abscheidereinheit, eine Hauptwasserpumpe, ein Wärmetauscher, der Gleichrichter und die Elektrolyseeinheit in einem Elektrolysemodul räumlich nahe benachbart angeordnet werden könen. Da die Wassertemperatur zu einer Reinigungseinheit reduziert wird, kann ein zusätzlicher Wärmetauscher stromauf hiervon verkleinert werden oder wegfallen. Durch die erwähnten Vorteile ergeben sich reduzierte CAPEX und OPEX sowie ein geringerer Wartungsbedarf.

Entsprechendes gilt auch für eine Anlage, die gemäß einer Ausgestaltung der Erfindung dazu eingerichtet ist, ein Verfahren gemäß einer beliebigen Ausgestaltung der vorliegenden Erfindung durchzuführen.

### Kurze Beschreibung der Zeichnung

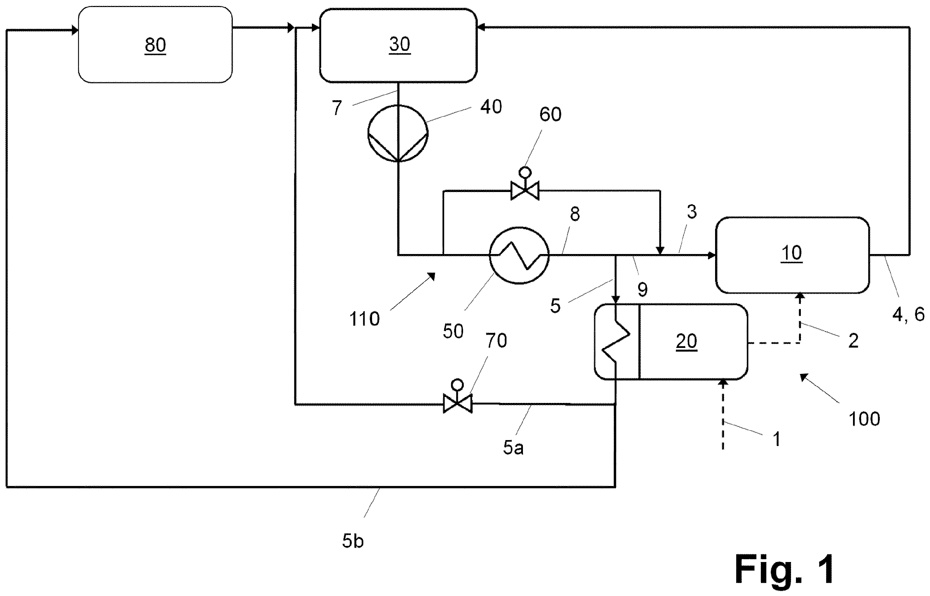

Ausführungsformen der Erfindung werden nachfolgend rein beispielhaft unter Bezugnahme auf die beigefügte Zeichnung beschrieben, wobei
Figur 1 ein Verfahren gemäß einer Ausgestaltung der Erfindung veranschaulicht.

### Ausführungsformen der Erfindung

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

Die vorliegende Erfindung und Ausgestaltungen hiervon werden nachfolgend unter Bezugnahme auf eine Elektrolyse mit Protonenaustauschmembran erläutert. Wie mehrfach angesprochen, ist die Erfindung jedoch nicht hierauf beschränkt.

In Figur 1 ist ein Verfahren gemäß einer Ausgestaltung der Erfindung veranschaulicht und insgesamt mit 100 bezeichnet.

Das Verfahren 100 dient zur Herstellung von Wasserstoff und/oder Sauerstoff durch Elektrolyse, wobei die Wasserstoffgewinnung nicht gesondert veranschaulicht ist. Eine Elektrolyseeinheit 10 wird hierbei mit Gleichstrom 2 gespeist, der unter Verwendung eines Gleichrichters 20 aus Wechselstrom 1 bereitgestellt wird. Die Stromflüsse sind jeweils mit gestrichelten Pfeilen veranschaulicht.

Die Elektrolyseeinheit 10 wird ferner unter Verwendung eines insgesamt mit 110 angegebenen Wasserkreislaufs mit Wasser gespeist. Der Gleichrichter 20 wird dabei unter Verwendung von Kühlwasser gekühlt wird, das unter Verwendung eines Teilstroms 5 von in dem Wasserkreislauf 110 geführtem und/oder dem Wasserkreislauf zugeführtem Wasser bereitgestellt wird. Letzteres, die Speisung unter Verwendung eines Teilstroms von dem Wasserkreislauf 110 zugeführtem Wasser, d.h. Makeup-Wasser, ist nicht gesondert veranschaulicht.

Der Elektrolyseeinheit 10 wird Wasser 4 in einem Zweiphasenstrom 4, 6 mit einem Anodengas 6 entnommen, wobei der Zweiphasenstrom 4, 6 einer Separatoreinheit 30 zugeführt wird. In der Separatoreinheit 30 scheidet sich das Wasser 4 von dem Anodengas 6, d.h. überwiegend Sauerstoff, ab, wobei letzterer beispielsweise einer geeigneten Aufbereitung oder Verwendung zugeführt oder an die Atmosphäre abgegeben werden kann.

Der Separatoreinheit 30 wird Wasser, nun mit 7 bezeichnet, entnommen und zumindest zum Teil einer Kühleinheit 50 zugeführt. Der zur Bereitstellung des Kühlwassers verwendete Teilstrom 5 wird in dem hier veranschaulichten Beispiel von einem der Kühleinheit 50 entnommenen Wasserstrom 8 abgezweigt. Er weist daher die in der Kühleinheit 50 erreichte Temperatur auf. Ein nach dem Abzweigen des Teilstroms 5 verbleibender Reststrom 9 des der Kühleinheit 50 entnommenen Wasserstroms 8 oder ein Teil hiervon wird zur Bereitstellung des Wassers 3 verwendet, mit dem die Elektrolyseeinheit 10 gespeist wird.

Zur Einstellung einer Temperatur des Wassers 3 wird im hier veranschaulichten Beispiel der Separatoreinheit 30 weiteres Wasser 7 entnommen, von dem zumindest ein Teil unter Umgehung der Kühleinheit 50 zur Bereitstellung des Wassers 3 verwendet wird, mit dem die Elektrolyseeinheit 10 gespeist wird. Hierzu ist ein entsprechender Bypass über ein Ventil 60 vorgesehen.

Das Kühlwasser 5 bzw. ein Teil 5b hiervon wird nach der Verwendung zur Kühlung des Gleichrichters 20 einer Reinigungseinheit 80 zugeführt, die in den Wasserkreislauf 110 eingebunden ist. Ein weiterer Teil 5a des Kühlwassers 5 kann in die Separatoreinheit 30 zurückgeführt werden. Die Rückführung von Kühlwasser in die Separatoreinheit 30 ist optional, d.h. es kann auch das gesamte Kühlwasser 5 über die Reinigungseinheit 80 geführt werden, wie mit dem Teil 5b veranschaulicht.

## Patentansprüche

1. Verfahren (100) zur Herstellung von Wasserstoff und/oder Sauerstoff durch Elektrolyse, bei dem eine Elektrolyseeinheit (10) mit Gleichstrom (2) gespeist wird, der unter Verwendung eines Gleichrichters (20) aus Wechselstrom (1) bereitgestellt wird, wobei die Elektrolyseeinheit (10) unter Verwendung eines Wasserkreislaufs (110) mit Wasser gespeist wird, **dadurch gekennzeichnet, dass** der Gleichrichter (20) unter Verwendung von Kühlwasser gekühlt wird, das unter Verwendung eines Teilstroms (5) von in dem Wasserkreislauf (110) geführtem und/oder dem Wasserkreislauf (110) zugeführtem Wasser bereitgestellt wird.

2. Verfahren (100) nach Anspruch 1, bei dem der Elektrolyseeinheit (10) Wasser (4) in einem Zweiphasenstrom (4, 6) mit einem Anodengas (6) entnommen wird, wobei der Zweiphasenstrom (4, 6) einer Separatoreinheit (30) zugeführt wird.

3. Verfahren (100) nach Anspruch 2, bei dem der Separatoreinheit (30) Wasser (7) entnommen und zumindest zum Teil einer Kühleinheit (50) zugeführt wird.

4. Verfahren (100) nach Anspruch 3, bei dem der zur Bereitstellung des Kühlwassers verwendete Teilstrom (5) von einem der Kühleinheit (50) entnommenen Wasserstrom (8) abgezweigt wird.

5. Verfahren (100) nach Anspruch 4, bei dem ein nach dem Abzweigen des Teilstroms (5) verbleibender Reststrom (9) des der Kühleinheit (50) entnommenen Wasserstroms (8) oder ein Teil hiervon zur Bereitstellung des Wassers (3) verwendet wird, mit dem die Elektrolyseeinheit (10) gespeist wird.

6. Verfahren (100) nach Anspruch 5, bei dem zumindest ein Teil des der Separatoreinheit (30) entnommenen Wasser (7) unter Umgehung der Kühleinheit (50) zur Bereitstellung des Wassers (3) verwendet wird, mit dem die Elektrolyseeinheit (10) gespeist wird.

7. Verfahren (100) nach einem der Ansprüche 2 bis 6, bei dem das Kühlwasser oder ein Teil hiervon nach der Verwendung zur Kühlung des Gleichrichters (10) einer in den Wasserkreislauf (110) eingebundenen Reinigungseinheit (80) zugeführt wird.

8. Verfahren (100) nach einem der vorstehenden Ansprüche, bei dem das der Separatoreinheit (30) entnommene Wasser (7) eine Temperatur in einem Temperaturbereich von 50 bis 80 °C aufweist und/oder bei dem der der Kühleinheit (50) entnommene Wasserstrom (8) eine Temperatur in einem Temperaturbereich von weniger als 50 °C aufweist und/oder bei dem das Wasser (3), mit dem die Elektrolyseeinheit (10) gespeist wird, eine Temperatur in einem Temperaturbereich von 50 bis 80 °C aufweist.

9. Verfahren (100) nach einem der vorstehenden Ansprüche, bei dem der Wasserkreislauf (110) einen Reinigungskreislauf umfasst, wobei der zur Bereitstellung des Kühlwassers verwendete Teilstrom (5) ein Teilstrom des in dem Reinigungskreislauf geführten Wassers ist.

10. Anlage zur Herstellung von Wasserstoff und/oder Sauerstoff, mit einer Elektrolyseeinheit (10) und einem Gleichrichter (20), wobei der Gleichrichter (20) dafür eingerichtet ist die Elektrolyseeinheit (10) mit Gleichstrom (2) zu speisen und den Gleichstrom aus Wechselstrom (1) bereitzustellen, wobei die Anlage dafür eingerichtet ist, die Elektrolyseeinheit (10) unter Verwendung eines Wasserkreislaufs (110) mit Wasser zu speisen, **dadurch gekennzeichnet, dass** die Anlage dafür eingerichtet ist, den Gleichrichter (20) unter Verwendung von Kühlwasser zu kühlen und das Kühlwasser unter Verwendung eines Teilstroms (5) von in dem Wasserkreislauf (110) geführtem und/oder dem Wasserkreislauf zugeführtem Wasser bereitzustellen.

11. Anlage nach Anspruch 10, die zur Durchführung eines Verfahrens nach einem der Ansprüche 1 bis 9 eingerichtet ist.
